# EUROPÄISCHE PATENTANMELDUNG

(11) **EP 2 289 987 A1**
(43) Veröffentlichungstag der Anmeldung: **02.03.2011**
(21) Anmeldenummer: 10173867.2
(22) Anmeldetag: 24.08.2010
(51) Int. Cl.: C08K 5/00, C08K 13/02, C08K 5/098, C08K 5/101, C08K 5/14

(54) **Vulkanisierbare Mischungen und deren Verwendung für die Reparatur von kautschukbasierten Formkörpern**

(30) Priorität: 26.08.2009 DE 102009038615
(71) Anmelder: LANXESS Deutschland GmbH, 51369 Leverkusen (DE)
(72) Erfinder: Taschner, Frank, 40789, Monheim (DE); Haider, Joachim, 80637, München (DE)

(57) **Zusammenfassung**

Die Erfindung betrifft eine neue vulkanisierbare Mischung enthaltend mindestens einen optional hydrierten Nitrilkautschuk, mindestens ein Metallsalz einer ungesättigten Carbonsäure, mindestens ein spezielles flüssiges Diacrylat, mindestens einen Vernetzer sowie optional weitere Additive, ein Verfahren zu deren Herstellung und deren Verwendung zur Reparatur von Formkörper aller Art, insbesondere Walzenbelägen.

## Beschreibung

Die Erfindung betrifft neue vulkanisierbare Mischungen, die mindestens einen optional hydrierten Nitrilkautschuk, mindestens ein Metallsalz eines Acrylates, mindestens ein flüssiges Diacrylat sowie optional weitere Additive enthalten, ein Verfahren zu deren Herstellung und deren Verwendung für die Reparatur von Formkörpern aller Art, insbesondere Walzenbelägen.

Walzen mit Kautschukbelägen werden in vielen Bereichen eingesetzt, u.a. in der Druck- und Textilindustrie, in Büromaschinen, wie z.B. Fax- oder Kopiergeräten, sowie in der Stahl- und Papierindustrie.

Besonders in der Stahl- und Papierindustrie sind Walzenbeläge extremen Beanspruchungen ausgesetzt. Hierbei wird von den Belägen vor allem eine Kombination aus folgenden Eigenschaften gefordert:
- hohe Härte
- niedriger Druckverformungsrest
- niedriger Abrieb
- geringe Quellung in den verwendeten Medien
- gute Hitze- und chemische Beständigkeit
- exzellente Haftung zwischen Belag und Metalluntergrund sowie
- geringer Wärmeaufbau ("heat build-up") bei mechanischer Belastung.

Der EP-A-1 083 197 lag die Aufgabe zugrunde, nach neuen Walzenbelägen mit dem o.g. Eigenschaftsprofil, insbesondere mit möglichst hoher Härte zu suchen. Derartige Kautschukwalzenbeläge werden üblicherweise in einem Wickelverfahren um den Walzenkern hergestellt. In der EP-A-1 083 197 wird eine neue Kautschukmischung als besonders geeignetes Material für die Herstellung von Erstbelägen auf Walzen beschrieben. Diese Mischung enthält einen oder mehrere optional hydrierte Nitrilkautschuke, ein oder mehrere Metallsalze eines Acrylats, ein oder mehrere gegebenenfalls auf einen Träger aufgebrachte flüssige Acrylate, sowie gegebenenfalls weitere Additive und/oder Füllstoffe. Als flüssige Acrylate werden Trimethylolpropantrimethacrylat (TRIM), Butandioldimethacrylat (BDMA) und Ethylenglykoldimethacrylat (EDMA), welche die folgenden Strukturformeln besitzen, eingesetzt.

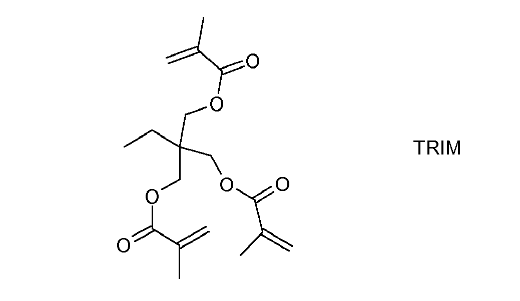

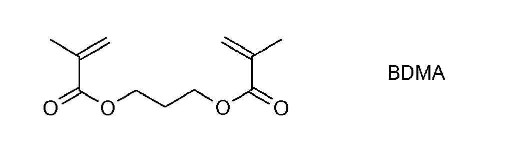

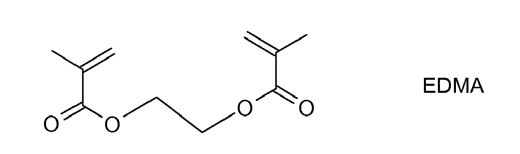

Die genannten flüssigen Acrylate TRIM, BDMA uind EDMA erfüllen dabei die Funktion, eine Einarbeitung größerer Mengen Füllstoff (verstärkender oder auch nicht-verstärkender Natur) in die Kautschukmischung zu ermöglichen. Dabei ist jedoch strikt darauf zu achten, dass die daraus resultierende Kautschukmischung eine ausreichende Mindestviskosität erreicht, um Verarbeitungsnachteile zu vermeiden. Eine "zu flüssige", sprich zu niedrigviskose Kautschukmischung lässt sich mit der üblichen Wickeltechnik entweder gar nicht mehr um den Walzenkern wickeln, haftet nicht mehr ausreichend oder führt durch die Schwerkraft zu einer asymmetrischen Schichtdicke auf dem Walzenkern. Dies macht in der Regel eine aufwändige Nachbearbeitung der Walzenbeschichtung nach der Vulkanisation erforderlich - auf Kosten der Wirtschaftlichkeit des Gesamtprozesses.

Im Verlauf der Nutzungsdauer derartig beschichteter Walzen kommt es unter Betriebsbedingungen neben unvermeidlichen Abriebserscheinungen auch zu einzelnen Defektstellen auf dem Walzenbelag durch Einwirkung von Fremdkörpern (z.B. Steinchen, Holzpartikel oder andere Fremdkörper), welche eine Reparatur oder sogar den vorzeitigen Austausch mit entsprechenden Produktionsausfällen erforderlich machen. Bisher werden solche Defekte, die während des Walzenbetriebs auftreten, durch käuflich erhältliche Reparatur-Kits behoben. Kommerziell verfügbare Reparatur-Kits basieren beispielsweise auf Epoxid- oder Vinylesterharzen oder aber auf Basis modifizierter Polybutadienkautschuke (z.B. Rema Tip Top® Reparatur Systeme). Hierbei handelt es sich üblicherweise um mehrkomponentige Systeme, die erst kurz vor der Verwendung miteinander vermischt werden dürfen und nur eine vergleichsweise kurze Verarbeitungszeit bieten. Bei sogenannten Weichgummikits ist darüber hinaus in einigen Fällen noch zusätzlich ein Haftprimer einzusetzen, um eine ausreichende Haftung zwischen der Reparaturmasse und der zu reparierenden Gummioberfläche zu erzielen.

Alternativ ist eine Reparatur von Fehlstellen auf Walzenbelägen möglich, in dem man beispielsweise zunächst die fehlerhafte Stelle mittels eines Fräswerkzeugs (z.B. Multiwerkzeug der Fa. Dremel) ausfräst, entfettet und anschließend eine dünne Kalanderkautschukplatte in die ausgefräste Stelle einlegt. Anschließend wird eine Vulkanisation durch Auflegen einer Heizplatte unter Druck mittels Spannriemen durchgeführt und auf einer Schleifbank gelegentlich sogar mittels Handschleifmittel eine Endbearbeitung vorgenommen. In vielen Fällen besitzt die fertige Reparaturstelle vom Originalmaterial deutlich abweichende Oberflächeneigenschaften (z.B. bezüglich Oberflächenspannung, Benetzungsverhalten). Wünschenswert wäre jedoch eine Oberfläche mit einheitlicheren Eigenschaften.

Entscheidend für die Eignung als Reparaturmasse oder Reparatur-Kit ist vor allem eine leichte Verarbeitbarkeit, d.h. eine hinreichend niedrige Viskosität, da Reparaturmassen üblicherweise in Kartuschen-Form vertrieben werden. Diese Anforderungen werden von den kommerziell verfügbaren Reparatur-Kits nicht durchgängig erfüllt. Zum anderen muss die Reparaturmasse eine gute Haftung an die Walzenbeschichtung bzw. den Untergrund aufweisen und nach dem Aufbringen und Aushärten durch die Vulkanisation über ein Eigenschaftsprofil verfügen, das dem ursprünglichen Walzenbelag möglichst stark ähnelt bzw. entspricht, um den hohen mechanischen Beanspruchungen standzuhalten, bis der Walzenbelag während des nächsten geplanten Wartungsintervalls ausgetauscht wird.

Die **Aufgabe der vorliegenden Erfindung** bestand somit darin, eine Reparaturmischung bereitzustellen, die nach der Vulkanisation ein dem Originalmaterial entsprechendes oder möglichst ähnliches Eigenschaftsprofil besitzt, eine exzellente Verarbeitbarkeit bei ausreichender Verarbeitungssicherheit aufweist und sich in handelsüblichen Kartuschen verarbeiten läßt.

### Gegenstand der Erfindung sind somit vulkanisierbare Mischungen enthaltend

a) mindestens einen optional hydrierten Nitrilkautschuk,
b) mindestens ein Metallsalz einer ungesättigten Carbonsäure,
c) mindestens ein bei Raumtemperatur in flüssiger Form vorliegendes Diacrylat sowie
d) mindestens einen Vernetzer.

In einer weiteren Ausführungsform können die erfindungsgemäßen vulkanisierbaren Mischungen zusätzlich als Komponente e) mindestens ein bei Raumtemperatur in flüssiger Form vorliegendes monofunktionelles Acrylat enthalten. Bevorzugt ist dieses ausgewählt aus der Gruppe bestehend aus
(i) Octadecylacrylat,
(ii) Laurylacrylat,
(iii) Hexadecylacrylat und
(iv) Isodecylacrylat.

In einer weiteren Ausführungsform können die erfindungsgemäßen vulkanisierbaren Mischungen auch noch ein oder mehrere weitere Additive f) enthalten.

**Gegenstand der Erfindung** ist ferner ein Verfahren zur Herstellung dieser vulkanisierbaren Mischung durch Mischung der Komponenten a), b), c) und d) bzw. im Fall der bevorzugten Ausführungsformen zusätzlich der Komponenten e) und f).

Ein **weiterer Gegenstand der Erfindung** ist die Verwendung der vulkanisierbaren Mischungen zur Reparatur von Formkörpern auf Kautschukbasis, bevorzugt von Formkörpern auf Basis von optional hydrierten Nitrilkautschuken, insbesondere von Walzenbelägen auf Basis von optional hydrierten Nitrilkautschuken.

Unter dem Begriff Raumtemperatur wird im Rahmen dieser Anmeldung eine Temperatur im Bereich von 22 +/- 2°C verstanden.

Überraschenderweise gelingt es durch die Kombination der Komponenten a), b) und d) mit den flüssigen Diacrylaten c) eine vulkanisierbare Mischung bereitzustellen, die eine ausreichende Fließfähigkeit besitzt und sich somit erfolgreich mit einer vernünftigen Verarbeitungszeit aus Kartuschen verarbeiten lässt und eine langlebige Reparatur von Fehlstellen und Defekten in kautschukbasierten Formkörpern ermöglicht, wie z.B. in Walzenbelägen, insbesondere in solchen auf Basis von optional hydrierten Nitrilkautschuken. Versucht man dagegen, die aus EP-A-1 083 197 bekannten vulkanisierbaren Kautschukmischungen mit TRIM, BDMA oder EDMA als flüssiger Methacrylat-Komponente zur Reparatur derartiger Defekte in kautschukbasierten Formkörpern einzusetzen, so stellt man fest, dass diese nur sehr kurze Scorch-Zeiten aufweisen und sich somit nur sehr schlecht aus einer Kartusche verarbeiten lassen. Werden dagegen die erfindungsgemäßen Mischungen auf Basis flüssiger Diacrylate eingesetzt, so werden diese Nachteile nicht beobachtet.

### Komponente a): Optional hydrierte Nitrilkautschuke

### Nitrilkautschuk

In der erfindungsgemäßen Mischung können als Komponente a) Nitrilkautschuke eingesetzt werden, die Wiederholungseinheiten aufweisen, die sich von mindestens einem α,β-ungesättigten Nitril, mindestens einem konjugierten Dien und gegebenenfalls einem oder mehreren weiteren copolymerisierbaren Monomere ableiten.

Das konjugierte Dien kann von jeder Natur sein. Bevorzugt werden (C₄-C₆)-konjugierte Diene eingesetzt. Besonders bevorzugt sind 1,3-Butadien, Isopren, 2,3-Dimethylbutadien, Piperylen, 1,3-Pentadien oder Mischungen daraus. Insbesondere bevorzugt sind 1,3-Butadien und Isopren oder Gemische daraus. Ganz besonders bevorzugt ist 1,3-Butadien.

Als α,β-ungesättigtes Nitril kann jedes bekannte α,β-ungesättigte Nitril eingesetzt werden, bevorzugt sind (C₃-C₅)-α,β-ungesättigte Nitrile wie Acrylnitril, Methacrylnitril, 1-Chloracrylnitril, Ethacrylnitril, 2-Cyanoacrylate oder Mischungen davon. Besonders bevorzugt ist Acrylnitril.

Ein besonders bevorzugter Nitrilkautschuk ist ein Copolymer aus Acrylnitril und 1,3-Butadien.

Der erfindungsgemäß einsetzbare Nitrilkautschuk kann neben den sich von mindestens einem konjugierten Dien und mindestens einem α,β-ungesättigten Nitril ableitenden Wiederholungseinheiten auch noch Wiederholungseinheiten enthalten, die sich von einem oder mehreren weiteren copolymerisierbaren Monomeren ableiten.

Infrage kommen hierfür beispielsweise carboxylgruppenhaltige, copolymerisierbare Termonomere, bevorzugt **α,β-ungesättigte Mono- oder Dicarbonsäuren, deren Ester, α,β-ungesättigte Dicarbonsäuren, deren Mono- oder -Diester sowie die entsprechenden Anhydride oder Amide.**

Als **α,β-ungesättigte Monocarbonsäuren** können bevorzugt Acrylsäure und Methacrylsäure eingesetzt werden.

Einsetzbar sind auch **Ester der α,β-ungesättigten Monocarbonsäuren,** bevorzugt deren Alkylester, Alkoxyalkylester, Cyanoalkylester, Hydroxyalkylester, Fluorobenzylester oder Fluoroalkylester.

Bevorzugt sind **C₁-C₁₈ Alkylester der α,β-ungesättigten Monocarbonsäuren.** Besonders bevorzugt sind Alkylester, insbesondere C₁-C₁₂ Alkylester der Acrylsäure oder der Methacrylsäure, insbesondere Methylacrylat, Ethylacrylat, Propylacrylat, n-Butylacrylat, tert.-Butylacrylat, n-Hexylacrylat, 2-Ethylhexylacrylat, n-Dodecylacrylat, Laurylacrylat Methylmethacrylat, Ethylmethacrylat, Propylmethacrylat, n-Butylmethacrylat, tert.-Butylmethacrylat, n-Hexylmethacrylat, 2-Ethylhexylmethacrylat und Laurylmethacrylat.

Bevorzugt sind auch **C₂-C₁₈ Alkoxyalkylester der α,β-ungesättigten Monocarbonsäuren.** Besonders bevorzugt sind Alkoxyalkylester der Acrylsäure oder der Methacrylsäure, insbesondere C₂-C₁₂-Alkoxyalkylester der Acrylsäure oder der Methacrylsäure, ganz besonders bevorzugt Methoxymethyl(meth)acrylat, Methoxyethyl(meth)acrylat, Ethoxyethyl(meth)acrylat und Methoxyethyl-(meth)acrylat.

Einsetzbar sind auch Mischungen von Alkylestern, wie z.B. den vorgenannten, mit Alkoxyalkylestern, z.B. in Form der vorgenannten.

Einsetzbar sind auch **Cyanoalkylacrylate and Cyanoalkylmethacrylate,** in denen die C-Atom-Zahl der Cyanoalkylgruppe 2-12 beträgt, vorzugsweise α-Cyanoethyl(meth)acrylat, β-Cyanoethyl(meth)acrylat und Cyanobutyl(meth)acrylat.

Einsetzbar sind auch **Hydroxyalkylacrylate and Hydroxyalkylmethacrylate,** in denen die C-Atom-Zahl der Hydroxyalkylgruppen 1-12 beträgt, vorzugsweise 2-Hydroxyethyl(meth)acrylat, 2-Hydroxyethyl(meth)acrylat und 3-Hydroxypropyl(meth)acrylat und Hydroxy(butyl(meth)acrylat.

Einsetzbar sind auch Fluor-substituierte benzylgruppenhaltige Acrylate oder Methacrylate, vorzugsweise Fluorobenzylacrylat und Fluorobenzylmethacrylat. Einsetzbar sind auch Fluoroalkylgruppen haltige Acrylate und -Methacrylate, vorzugsweise Trifluoroethylacrylat und Tetrafluoropropylmethacrylat. Einsetzbar sind auch Aminogruppenhaltige αβ-ungesättigte Carbonsäureester wie Dimethylaminomethylacrylat und Diethylaminoethylacrylat.

Als sonstige Ester der α,β-ungesättigten Monocarbonsäuren werden ferner beispielsweise Polyethylenglykol(meth)acrylat, Polypropylenglykol(meth)acrylat, Glycidyl(meth)acrylat, Epoxy(meth)acrylat, N-(2-Hydroxyethyl)acrylamide, N-(2-Hydroxymethyl)acrylamide und Urethan(meth)acrylat eingesetzt.

Als weitere copolymerisierbare Monomere können ferner **α,β-ungesättigte Dicarbonsäuren,** bevorzugt Maleinsäure, Fumarsäure, Crotonsäure, Itaconsäure, Citraconsäure und Mesaconsäure, eingesetzt werden.

Eingesetzt werden können ferner **α,β-ungesättigte Dicarbonsäureanhydride,** bevorzugt Maleinsäureanhydrid, Fumarsäureanhydrid, Itaconsäureanhydrid, Citraconsäureanhydrid und Mesaconsäureanhydrid.

Eingesetzt werden können ferner **Mono- oder Diester von α,β-ungesättigten Dicarbonsäuren.**

Bei diesen α,β-ungesättigten Dicarbonsäuremono- oder diestern kann es sich beispielsweise handeln um **Alkyl-,** bevorzugt C₁-C₁₀-Alkyl, insbesondere Ethyl-, n-Propyl-, iso-Propyl, n-Butyl-, tert.-Butyl, n-Pentyl- oder n-Hexyl-, **Alkoxyalkyl-,** bevorzugt C₂-C₁₂ Alkoxyalkyl-, besonders bevorzugt C₃-C₈- Alkoxyalkyl, **Hydroxyalkyl,** bevorzugt C₁-C₁₂ Hydroxyalkyl-, besonders bevorzugt C₂-C₈-Hydroxyalkyl, **Cycloalkyl-,** bevorzugt C₅-C₁₂-Cycloalkyl-, besonders bevorzugt C₆-C₁₂-Cycloalkyl, **Alkylcycloalkyl-,** bevorzugt C₆-C₁₂-Alkylcycloalkyl-, besonders bevorzugt C₇-C₁₀-Alkylcycloalkyl, sowie **Arylester,** bevorzugt C₆-C₁₄-Aryl-Mono- oder -Diester, wobei es sich im Fall der Diester jeweils auch um gemischte Ester handeln kann.

### Beispiele von α,β-ungesättigten Dicarbonsäuremonoestern umfassen

- Maleinsäuremonoalkylester, bevorzugt Monomethylmaleat, Monoethylmaleat, Monopropyl maleat und Mono-n-butylmaleat;
- Maleinsäuremonocycloalkylester, bevorzugt Monocyclopentylmaleat, Monocyclohexyl maleat und Monocycloheptylmaleat;
- Maleinsäuremonoalkylcycloalkylester, bevorzugt Monomethylcyclopentylmaleat und Monoethylcyclohexylmaleat;
- Maleinsäuremonoarylester, bevorzugt Monophenylmaleat;
- Maleinsäuremonobenzylester, bevorzugt Monobenzylmaleat;
- Fumarsäuremonoalkylester, bevorzugt Monomethylfumarat, Monoethylfumarat, Monopropyl fumarat und Mono-n-butyl fumarat;
- Fumarsäuremonocycloalkylester, bevorzugt Monocyclopentylfumarat, Monocyclohexyl fumarat und Monocycloheptylfumarat;
- Fumarsäuremonoalkylcycloalkylester, bevorzugt Monomethylcyclopentylfumarat und Monoethylcyclohexylfumarat;
- Fumarsäuremonoarylester, bevorzugt Monophenylfumarat;
- Fumarsäuremonobenzylester, bevorzugt Monobenzylfumarat;
- Citraconsäuremonoalkylester, bevorzugt Monomethylcitraconat, Monoethylcitraconat, Monopropylcitraconat und Mono-n-butyl citraconat;
- Citraconsäuremonocycloalkylester, bevorzugt Monocyclopentylcitraconat, Monocyclohexyl citraconat und Monocycloheptylcitraconat;
- Citraconsäuremonoalkylcycloalkylester, bevorzugt Monomethylcyclopentylcitraconat und Monoethylcyclohexylcitraconat;
- Citraconsäuremonoarylester, bevorzugt Monophenylcitraconat;
- Citraconsäuremonobenzylester, bevorzgut Monobenzylcitraconat;
- Itaconsäuremonoalkylester, bevorzugt Monomethylitaconat, Monoethylitaconat, Monopropyl itaconat und Mono-n-butyl itaconat;
- Itaconsäuremonocycloalkylester, bevorzugt Monocyclopentylitaconat, Monocyclohexyl itaconat und Monocycloheptylitaconat;
- Itaconsäuremonoalkylcycloalkylester, bevorzugt Monomethylcyclopentylitaconat und Monoethylcyclohexylitaconat;
- Itaconsäuremonoarylester, bevorzugt Monophenylitaconat;
- Itaconsäuremonobenzylester, bevorzugt Monobenzylitaconat.
- Mesaconsäuremonoalkylester, bevorzugt Mesaconsäuremonoethylester;

Als **α,β-ungesättigte Dicarbonsäurediester** können die analogen Diester basierend auf den zuvor genannten Monoestergruppen eingesetzt werden, wobei es sich bei den Estergruppen auch um chemisch verschiedene handeln kann.

**Weitere mögliche Monomere** sind Vinylaromaten wie Styrol, α-Methylstyrol und Vinylpyridin, sowie nicht konjugierte Diene, wie 4-Cyanocyclohexen und 4-Vinylcyclohexen, und Alkine, wie 1-oder 2-Butin.

Bevorzugt werden als Komponente a) Nitrilkautschuke eingesetzt, die Wiederholungseinheiten von Acrylnitril, 1,3-Butadien und gegebenenfalls von einem oder mehreren weiteren copolymerisierbaren Monomeren aufweisen. Ebenso bevorzugt sind Nitrilkautschuke, die Wiederholungseinheiten von Acrylnitril, 1,3-Butadien und einer oder mehreren α,β-ungesättigten Mono- oder Dicarbonsäuren, deren Estern oder Amiden aufweisen, und insbesondere Wiederholungseinheiten eines Alkylesters einer α,β-ungesättigten Carbonsäuren, ganz besonders bevorzugt von Methyl(meth)acrylat, Ethyl(meth)acrylat, Propyl(meth)acrylat, n-Butyl(meth)acrylat, t-Butyl(meth)acrylat, Hexyl(meth)acrylat, 2-Ethlyhexyl(meth)acrylat, Octyl(meth)acrylat oder Lauryl(meth)acrylat.

Die Anteile an konjugiertem Dien und α,β-ungesättigtem Nitril in den erfindungsgemäß einzusetzenden Nitrilkautschuken können in weiten Bereichen variieren. Der Anteil des oder der Summe der konjugierten Diene liegt üblicherweise im Bereich von 20 bis 95 Gew.%, bevorzugt im Bereich von 40 bis 90 Gew.-%, besonders bevorzugt im Bereich von 50 bis 85 Gew. %, bezogen auf das Gesamtpolymer. Der Anteil des oder der Summe der α,β-ungesättigten Nitrile liegt üblicherweise bei 5 bis 80 Gew.%, bevorzugt bei 10 bis 60 Gew.-%, besonders bevorzugt bei 15 bis 50 Gew.-%, bezogen auf das Gesamtpolymer. Die Anteile der Monomere summieren sich jeweils zu 100 Gew.-% auf.

Die zusätzlichen copolymerisierbaren Monomere können in Mengen von 0 bis 40 Gew.%, bevorzugt 0,1 bis 40 Gew.-%, besonders bevorzugt 1 bis 30 Gew.-%, bezogen auf das Gesamtpolymer, vorliegen. In diesem Fall werden entsprechende Anteile des oder der konjugierten Diene und/oder des oder der α,β-ungesättigten Nitrile durch die Anteile dieser zusätzlichen Monomere ersetzt, wobei sich die Anteile aller Monomere weiterhin jeweils zu 100 Gew.-% aufsummieren. Im Fall der Anwesenheit von einem oder mehreren Termonomeren hat es sich bewährt, dass der Anteil des oder der Summe der konjugierten Diene im Bereich von 40 bis 90 Gew.-% liegt, bevorzugt im Bereich von 50 bis 85 Gew. %, bezogen auf das Gesamtpolymer, der Anteil des oder der Summe der α,β-ungesättigten Nitrile bei 9,9 bis 59,9 Gew.-%, bevorzugt bei 14 bis 50 Gew.-%, bezogen auf das Gesamtpolymer, liegt und der Anteile des oder der Summe der Termonomere im Bereich von 0,1 bis 30 Gew.-%, bevorzugt 1 bis 20 Gew.-%, bezogen auf das Gesamtpolymer liegt, wobei sich die Anteile aller Monomere jeweils zu 100 Gew.% aufsummieren müssen.

Werden als zusätzliche Termonomere Ester der (Meth)acrylsäure eingesetzt, so erfolgt dies üblicherweise in Mengen von 1 bis 25 Gew. % bezogen auf das Gesamtpolymer

Werden als zusätzliche Termonomere α,β-ungesättigte Mono- oder Dicarbonsäuren eingesetzt, so erfolgt dies üblicherweise in Mengen von weniger als 10 Gew. % bezogen auf das Gesamtpolymer.

Der Stickstoffgehalt zur Bestimmung des Acrylnitrilgehalts wird in den erfindungsgemäßen Nitrilkautschuken gemäß DIN 53 625 nach Kjeldahl bestimmt. Aufgrund des Gehalts an polaren Comonomeren sind die Nitrilkautschuke üblicherweise in Methylethylketon bei 20°C ≥ 85 Gew. % löslich.

Die erfindungsgemäßen Nitrilkautschuke weisen **Mooney Viskositäten** (ML (1+4 @100°C), gemessen nach ASTM D1646) von 30 bis 150, bevorzugt von 30 bis 120 Mooney-Einheiten und besonders bevorzugt von 35 bis 110 Mooney-Einheiten auf.

### Hydrierte Nitrilkautschuke:

Neben oder anstelle der oben beschriebenen Nitrilkautschuke können als Komponente a) auch hydrierte Nitrilkautschuke (abgekürzt auch als "HNBR") eingesetzt werden, bei denen die C=C-Doppelbindungen der oben definierten Nitrilkautschuke selektiv (d.h. im Prinzip ohne Hydrierung der C≡N-Dreifachbindung) teilweise oder vollkommen hydriert sind. Bevorzugte hydrierte Nitrilkautschuke sind solche mit einem Hydriergrad, bezogen auf die aus dem konjugierten Dien stammenden C=C-Doppelbindungen, von mindestens 50, bevorzugt von mindestens 75, besonders bevorzugt von mindestens 95 und insbesondere von mindestens 98 %. Der Hydriergrad lässt sich NMR- und IR-spektroskopisch bestimmen.

Die Hydrierung von Nitrilkautschuken ist bekannt, z.B. aus US-A 3 700 637, DE-A-2 539 132, DE-A-3 046 008, DE-A-3 046 251, DE-A-3 227 650, DE-A-3 329 974, EP-A-111 412, FR-B-2 540 503. Hydrierter Nitrilkautschuk zeichnet sich durch hohe Reißfestigkeit, geringen Abrieb, niedrige bleibende Verformung nach Druck- und Zugbeanspruchung und gute Ölbeständigkeit, vor allem aber durch bemerkenswerte Stabilität gegen thermische und oxidative Einflüsse aus. Daher sind hydrierte Nitrilkautschuke im Rahmen dieser Erfindung besonders bevorzugt.

Die erfindungsgemäß einzusetzenden hydrierten Nitrilkautschuke weisen **Mooney Viskositäten** (ML (1 +4 @100°C), gemessen nach ASTM D 1646) von 30 bis 150, bevorzugt von 30 bis 120 Mooney-Einheiten und besonders bevorzugt von 35 bis 110 Mooney-Einheiten auf.

Die einsetzbaren Ntrilkautschuke sowie hydrierten Nitrilkautschuke besitzen üblicherweise eine Polydispersität PDI (PDI= Mw/Mn, wobei Mw das Gewichtsmittel und Mn das Zahlenmittel des Molekulargewichts darstellt) im Bereich von 2,0 - 6,0 und bevorzugt im Bereich von 2,0 - 4,0.

Derartige Nitrilkautschuke sind käuflich erhältlich beispielsweise als Produkte der Marken Perbunan® oder Krynac® von der Lanxess Deutschland GmbH. Auch derartige hydrierte Nitrilkautschuke sind im Handel erhältlich. Beispiele für hydrierte Nitrilkautschuke sind voll- und teilhydrierte Nitrilkautschuke mit Acrylnitrilgehalten im Bereich von 20 bis 50 Gew.% in Form der Therban®-Palette der Lanxess Deutschland GmbH sowie der Zetpol®-Palette der Nippon Zeon Corporation.

Beispiele für hydrierte Terpolymere sind die Butadien/Acrylnitril/Acrylat-Polymere der Therban®LT-Serie der Lanxess Deutschland GmbH. Ein Beispiel für carboxylierte hydrierte Nitrilkautschuke ist die Therban®XT-Serie der Lanxess Deutschland GmbH. Beispiele für hydrierte Nitrilkautschuke mit geringen Mooney-Viskositäten und daher noch zusätzlich verbesserter Verarbeitbarkeit sind die Produkte aus der Therban® AT-Serie, die nach der dem Fachmann geläufigen sogenannten "AT-Technologie" hergestellt werden, indem der Hydrierung der entsprechenden Nitrilkautschuke eine Metathese-Reaktion zwecks Abbau des Molekulargewichts vorgeschaltet ist.

### Komponente b): Metallsalz einer ungesättigten Carbonsäure

Die Kautschukmischung enthält zwingend mindestens ein Metallsalz einer ungesättigten Carbonsäure. Bei den Carbonsäuren handelt es sich um ungesättigte Carbonsäuren mit ein oder mehreren Carboxylgruppen, die ionisch an Metalle gebunden sind. Bevorzugt handelt es sich bei der ungesättigte Carbonsäure um eine ungesättigte Mono- oder Dicarbonsäure. Als ungesättigte Monocarbonsäure sind Acrylsäure und Methacrylsäure geeignet, als ungesättigte Dicarbonsäure Maleinsäure, Fumarsäure und Itaconsäure. Als Metalle kommen in Frage: Be, Mg, Ca, Sr, Ba, Ti, Cr, Mo, Mn, Fe, Co, Ni, Cu, Ag, Zn, Cd, Hg, Al, Sn, Pb und Sb. Bevorzugt sind Mg, Ca, Zn und Al.

Ein bevorzugtes Metallsalz einer ungesättigten Carbonsäure hat die folgende allgemeine Strukturformel: 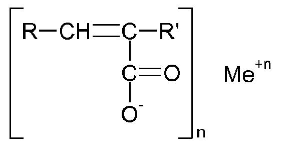 worin
- RundR': gleich oder verschieden sind und aliphatische oder aromatische Kohlenwasserstoffreste oder ein Wasserstoffatom darstellen,
- Me: für Be, Mg, Ca, Sr, Ba, Ti, Cr, Mo, Mn, Fe, Co, Ni, Cu, Ag, Zn, Cd, Hg, Al, Sn, Pb oder Sb steht, bevorzugt für Mg, Ca, Zn und Al und
- n: 2, 3 oder 4 ist.

Ein besonders bevorzugtes Metallsalz einer ungesättigten Carbonsäure besitzt die obige allgemeine Strukturformel, worin
- R und R': gleich oder verschieden sind und aliphatische C₁-C₁₀ Kohlenwasserstoffreste, bevorzugt C₁-C₈ Alkylreste, oder aromatische C₆-C₁₄-Kohlenwasserstoffreste, bevorzugt aromatische C₆-C₁₀-Kohlenwasserstoffreste oder ein Wasserstoffatom darstellen,
- Me: Mg, Ca, Zn oder Al bedeutet.
- n: 2 oder 3 ist.

Insbesondere bevorzugt ist der Einsatz von Zinkacrylat, Zinkdiacrylat, Zinkmethacrylat oder Zinkdimethacrylat. Derartige Produkte sind käuflich erhältlich, beispielsweise als Saret^{®} 633 (Sartomer Company Inc.).

Wenn das Metallsalz eines (Meth)Acrylates eingesetzt wird, so kann es sinnvoll sein, dieses gemeinsam mit einem Vulkanisationsverzögerer als weiterem Additiv f) einzusetzen. Hier kommen z.B. gehinderte Phenole, wie Methyl-substituierte Aminoalkylphenole, insbesondere 2,6-Di-tert.-butyl-4-dimethylaminomethylphenol in Betracht. Geeignete Vulkanisationsverzögerer sind dem Fachmann beispielsweise aus der US-A-4,857,571 bekannt.

Es ist möglich, das/die Metallsalze einer ungesättigten Carbonsäure entweder als solche zuzusetzen oder aber erst in-situ in der erfindungsgemäßen Kautschukmischung aus entsprechenden Ausgangsverbindungen zu bilden, indem man der Mischung eine Metallverbindung, beispielsweise eine Zinkverbindung wie Zinkoxid oder Zinkcarbonat, und die ungesättigte Carbonsäure, beispielsweise die Acryl- oder Methacrylsäure, zusetzt.

### Komponente c): Flüssiges Diacrylat

Von wesentlicher Bedeutung für die Erfindung ist der Einsatz eines bei Raumtemperatur in flüssiger Form vorliegenden Diacrylats. Ein Einsatz der aus EP-A-1 083 197 bekannten flüssigen Methacrylate führt dagegen nicht zum Ziel.

Bevorzugt handelt es sich bei den einsetzbaren Diacrylaten um Hexandioldiacrylat, Dipropylenglycolacrylat, Hexandiol-[2EO]-diacrylat oder Hexandiol-[2PO]-diacrylat.

Derartige flüssige Diacrylate sind käuflich in einem breiten Produktspektrum erhältlich. Das vorgenannte spezielle flüssige Diacrylat Hexandioldiacrylat ("HDDA") ist beispielsweise als Photomer^{®} 4017 (Cognis GmbH) oder als Sartomer SR 238 (Sartomer Company Inc.) zugänglich.

Die bevorzugten Diacrylate besitzen die folgenden Strukturen:

### Hexandioldiacrylat ("HDDA") :

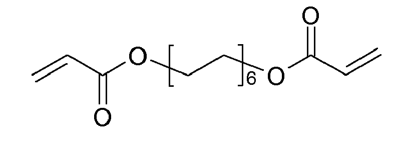

### Dipropylenglycoldiacrylat ("DPGDA"):

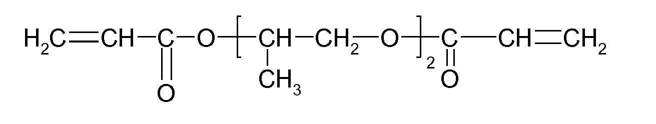

### Hexandiol[2EO]diacrylat

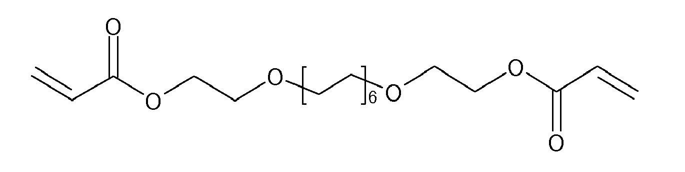

### Hexandiol[2PO]diacrylat

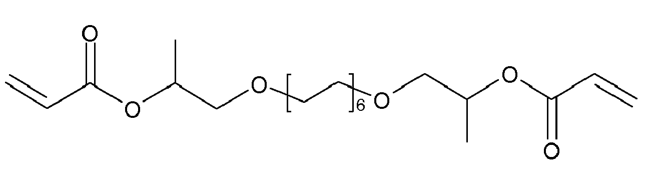

### Komponente d): Vernetzer

Die erfindungsgemäße Kautschukmischung muss mindestens einen Vernetzer als Komponente d) enthalten. Geeignete Vernetzer sind dem Fachmann bekannt. Als Vernetzer eignen sich beispielsweise Peroxo-Verbindungen, die eine -O-O-Einheit aufweisen.

Bevorzugte Peroxidsysteme umfassen Dialkylperoxide, Ketalperoxide, Aralkylperoxide, Peroxidether und Peroxidester, wie z.B. Di-tert.-butylperoxid, Bis-(tert.-butylperoxyisopropyl)-benzol, Dicumylperoxid, 2,5-Dimethyl-2,5-di(tert.-butylperoxy)-hexan, 2,5-Dimethyl-2,5-di(tert.-butylperoxy)-hexen-(3), 1,1-Bis-(tert.-butylperoxy)-3,3,5-trimethyl-cyclohexan, Benzoylperoxid, tert.-Butylcumylperoxid und tert.-Butylperbenzoat.

Die Peroxide können vorteilhafterweise auch in polymergebundener Form eingesetzt werden. Entsprechende Systeme sind kommerziell erhältlich, wie beispielsweise Polydispersion T(VC) D-40 P der Firma Rhein Chemie Rheinau GmbH, D (= polymergebundenes Di-tert.-Butylperoxy-isopropylbenzol).

### Komponente e): Flüssiges monofunktionelles Acrylat

Der erfindungsgemäßen Kautschukmischung können optional zur weiteren Einstellung der Viskosität im unvulkanisierten Zustand ein oder mehrere monofunktionelle Acrylate als Komponente e) zugesetzt werden. Bevorzugte Monoacrylate sind z.B. Octadecylacrylat, Hexadecylacrylat, Isodecylacrylat und Laurylacrylat. Ganz besonders bevorzugt ist Laurylacrylat.

### Komponente f): Weitere Additive

Die erfindungsgemäßen Kautschukmischungen zeichnen sich dadurch aus, dass sie bevorzugt keinerlei Füllstoffe, inbesondere keinen Russ, Silika oder Kreide, enthalten.

Abgesehen davon können die erfindungsgemäßen Kautschukmischungen aber ein oder mehrere weitere Additive als Komponente f) enthalten. Hierbei kommen beispielsweise die Folgenden dem Fachmann bekannten Additive in Frage:
- **Vulkanisationsaktivatoren,** insbesondere Metalloxide, wie Zinkoxid oder Magnesiumoxid;
- **Alterungsschutzmittel,** wie alkyl-substituierte Diphenylamine, Mercaptobenzimidazole, ungesättigte Ether, wie Vulkazon^{®} AFD (Lanxess Deutschland GmbH D) oder cyclische, ungesättigte Acetale, wie Vulkazon^{®} AFS/LG (Lanxess Deutschland GmbH, D);
- **Weichmacher,** insbesondere Carbonsäureester, wie Sebazinsäure und deren Derivate oder Trimellithsäure und deren Derivate;
- **Verarbeitungshilfsmittel,** insbesondere Stearinsäure und deren Derivate, wie Zinkstearat oder Polymere, wie Polyethylenvinylacetat (Levapren^{®} der Lanxess Deutschland GmbH, D) oder Poly-ethylenvinylacrylat (VAMAC® der DuPont);
- **Vulkanisationsverzögerer** zwecks Einstellung der Vernetzungsgeschwindigkeit.
- **Pigmente.**

Die Mengen der einzelnen Komponenten in der Mischung richten sich nach dem genauen Einsatzzweck der Mischung und lassen sich durch wenige Vorversuche ermitteln. Eine übliche erfindungsgemäß einzusetzende vulkanisierbare Mischung besitzt die folgende Zusammensetzung, wobei die für die Komponenten b), c) und d) genannten Gew.-Teile jeweils auf 100 Gew.-Teile der Komponente a) (bzw. der Summe der Komponenten a)) bezogen sind:
- 100 Gew.-Teile mindestens eines optional hydrierten Nitrilkautschuks als Komponente a)
- 10 bis 120 Gew.-Teile, bevorzugt 10 bis 85 Gew.-Teile, insbesondere 20 bis 65 Gew.-Teile mindestens eines Metallsalzes einer ungesättigten Carbonsäure als Komponente b),
- 5 bis 80 Gew.-Teile, bevorzugt 20 bis 60 Gew.-Teile mindestens eines flüssigen Diacrylats als Komponente c) und
- 1 bis 10 Gew.-Teile, bevorzugt 4 bis 8 Gew.-Teile, mindestens eines Vernetzers als Komponente d).

Die o.g. Zusammensetzung kann - wiederum bezogen auf 100 Gew.-Teile der Komponente(n) a) noch ein 1 bis 100 Gew.-Teile, bevorzugt 1 bis 80 Gew.-Teile und insbesondere 1 bis 50 Gew.-Teile mindestens eines flüssigen monofunktionellen Acrylats als Komponente e) enthalten.

### Die oben genannte Zusammensetzung kann - wiederum bezogen auf 100 Gew.-Teile der Komponente(n) a) noch eine oder mehrere Komponenten f) in folgenden Mengenbereichen

- 0 bis 4 Gew.-Teile Alterungsschutzmittel,
- 0 bis 2 Gew.-Teile Retarder,
- 0 bis 30 Gew.-Teile Metalloxide,
- 0 bis 150 Gew.-Teile Füllstoffe, bevorzugt aktive Füllstoffe,
- 0 bis 20 Gew.-Teile Weichmacher und
- 0 bis 2 Gew.-Teile Verarbeitungshilfsmittel enthalten.

In einer bevorzugten Ausführungsform enthält die vulkanisierbare Mischung:
a) 100 G e w .-Teile mindestens eines hydrierten Nitrilkautschuks mit Wiederholungseinheiten abgeleitet von mindestens einem konjugierten Dien, mindestens einem ungesättigten Nitril und gegebenenfalls einem oder mehreren weiteren copolymerisierbaren Monomeren, insbesondere eines hydrierten Butadien-Acrylnitril Copolymers,
b) 10 bis 120 Gew.-Teile, bevorzugt 10 bis 85 Gew.-Teile, insbesondere 20 bis 65 Gew.-Teile Zinkacrylat, Zinkdiacrylat, Zinkmethacrylat oder Zinkdimethacrylat,
c) 5 bis 80 Gew.-Teile, bevorzugt 20 bis 60 Gew.-Teile Hexandioldiacrylat, Dipropylenglycolacrylat, Hexandiol-[2EO]-diacrylat oder Hexandiol-[2PO]-diacrylat und
d) 1 bis 10 Gew.-Teile, bevorzugt 4 bis 8 Gew.-Teile eines peroxidischen Vernetzers, bevorzugt Bis-(tert.-butylperoxyisopropyl)-benzol und
e) optional 1 bis 100 Gew.-Teile, bevorzugt 1 bis 80 Gew.-Teile und insbesondere 1 bis 50 Gew.-Teile mindestens eines flüssigen monofunktionellen Acrylats,
wobei die für die Komponenten b), c) und d) genannten Gew.-Teil Angaben jeweils auf 100 Gew.Teile der Komponente a) bezogen sind und die Mischung besonders bevorzugt keinerlei Füllstoffe enthält.

Die Herstellung der erfindungsgemäßen vulkanisierbaren Mischung erfolgt durch Mischen der Komponenten a)-d) sowie optional einer oder mehrerer der Komponenten e) und f). Das Mischen kann in jedem dem Fachmann dafür bekannten Mischaggregat für Kautschuke erfolgen, insbesondere in einem Innenmischer, Kneter, auf einer Walze oder Schnecke. Dabei ist darauf zu achten, dass die Kautschukkomponente a) während des Mischvorgangs nicht abgebaut wird. Es ist von Vorteil, während des Mischvorgangs zu kühlen, um eine unerwünschtes Anspringen der Vulkanisation ("Scorch") zu vermeiden. Ebenso ist es empfehlenswert, das Peroxid als letzte Komponente, gegebenenfalls in einem separaten Mischvorgang, zuzugeben.

Es hat sich bewährt, die Polymer-Komponente a) aufgrund der niedrigen Endviskosität der erfindungsgemäßen Mischung vor den flüssigen Diacrylaten einzumischen, da sonst wegen der geringen Scherkräfte in der Mischung keine homogene Verteilung des Polymers möglich ist.

Die vulkanisierbaren Mischungen finden erfindungsgemäß Anwendung zur Reparatur von Formkörpern auf Kautschukbasis. Bei diesen kann es sich beispielsweise um Walzenbeläge, Riemen, Profile, Ringe, Dichtungen oder Dämpfungselemente handeln, bevorzugt handelt es sich um Beläge von Walzen für die Papier-, Textil-, Druck- und Stahlindustrie.

In der Regel verfügen Walzen über einen Metallkern mit variablem Durchmesser, wobei die Metallkerne bevorzugt einen Durchmesser von 0,5 cm bis 5 m besitzen. Der Metallkern besteht in der Regel aus Stahl verschiedenster Zusammensetzung, auf den der ursprüngliche Walzenbelag nach im Stand der Technik üblichen Verfahren aufgezogen und anschließend vernetzt wird.

Die zu reparierenden Formköper basieren beispielsweise auf Nitrilkautschuk oder hydriertem Nitrilkautschuk, für den die gleiche Definition gilt wie oben für die Komponente a) angegeben. Darüberhinaus sind auch Formkörper auf Basis anderer Kautschuke wie BR, NR, IIR, IR, EPDM, EPM, CR, SBR, AEM, ACM oder FKM (Fluorkautschuke) mit den vulkanisierbaren Mischungen erfindungsgemäß zu reparieren. Auch in Formkörpern, insbesondere Walzenbelägen, die auf Mischungen von Nitrilkautschuk und/oder hydriertem Nitrilkautschuk mit einem oder mehreren der anderen Kautschuken BR, NR, IIR, IR, EPDM, EPM, CR, SBR, AEM, ACM und FKM basieren, können entsprechende Defekte mit der erfindungsgemäßen Mischung repariert werden. Bevorzugt ist der zu reparierende Formkörper, insbesondere der Walzenbelag aus einer vulkanisierten Kautschukmischung enthaltend Nitrilkautschuk oder hydrierten Nitrilkautschuk aufgebaut.

Die erfindungsgemäß einzusetzenden vulkanisierbaren Mischungen, insbesondere solche mit hydrierten Nitrilkautschuken als Komponente a) sind für die Reparatur der Walzen besonders gut geeignet, da sie in vernetztem Zustand eine exzellente Härte (bestimmt nach DIN 53 505) im Bereich von 20 Shore D oder höher besitzen, kombiniert mit einer selbst bei erhöhten Servicetemperaturen guten Beständigkeit gegen Abrieb, Hitze, Wasser und Chemikalien. Dieses ausgeglichene Eigenschaftsspektrum ist bei der Reparatur von Defekten mit Reparatur-kits gemäß dem Stand der Technik nicht zu erreichen. Selbstverständlich eignen sich die erfindungsgemäßen Kautschukmischungen auch zur Reparatur anderer Formkörper auf Kautschukbasis, wie Riemen, Profile, Ringe, Dichtungen, oder Dämpfungselementen.

Es hat sich bewährt, die zu reparierenden Fehlstellen vor dem Auftrag der erfindungsgemäßen Mischung auszufräsen und zu entfetten. Anschließend lässt sich die erfindungsgemäße Mischung ohne Probleme bei Raumtemperatur auf die Fehlstellen auftragen, bevorzugt aus einer Kartusche. Die Vulkanisation wird bei einer Temperatur im Bereich von 160°C bis 200°C ausgeführt. Hierfür wird eine Heizplatte für einen Zeitraum von 10 min bis 6 h auf die mit der Kautschukmischung gefüllte Fehlstelle aufgesetzt. Sofern gewünscht, kann nach der Vulkanisation noch eine Endbearbeitung der Reparaturstelle mittels einer Schleifbank durchgeführt werden.

Die folgenden Beispiele dienen zur Erläuterung der Erfindung, ohne sie einschränken zu wollen.

### Beispiele:

### Therban^{®} 3407

hydrierter Nitrilkautschuk auf Basis von Acrylnitril und 1,3-Butadien mit einem Restdoppelbindungsgehalt (RDB) < 0,9, einem Acrylnitrilgehalt von 34 % ACN und einer Mooney Viskosität (ML 1+4 bei 100 °C) von 70 (Lanxess Deutschland GmbH).

### Therban^{®} AT 3404

hydrierter Nitrilkautschuk auf Basis von Acrylnitril und 1,3-Butadien mit einem Restdoppelbindungsgehalt (RDB) < 0,9, einem Acrylnitrilgehalt von 34 % ACN und einer Mooney Viskosität (ML 1+4 bei 100 °C) von 39 (Lanxess Deutschland GmbH).

### Sartomer^{®} SR633

Zinkdiacrylat mit Retarderzusatz (Sartomer Company Inc.)

### Luvomaxx^{®} CDPA

p-Dicumyldiphenylamin (Lehmann&Voss)

### Ethanox ^{®}4703

2,6-Ditert.-butyl-4-(dimethylamino)-phenol (Albemarle)

### PHOTOMER^{®} 4017 F

1,6-Hexandioldiacrylat (Cognis GmbH)

### DIPLAST^{®}8-10/ST

Stabilisiertes Trimellithat von C₈ -C₁₉ linearen Alkoholen (Lonza)

### SARTOMER^{®} SR 484

Octyl-Decyl-Acrylat (Sartomer Company Inc.)

### PERKADOX^{®} 14-40 B-PD

Bis[tert-butylperoxyisopropyl]benol (Akzo)

In Tabelle 1 sind die Zusammensetzungen für alle erfindungsgemäßen Beispiele angegeben. Bei allen Angaben handelt es sich um Gew.-Teile bezogen auf 100 Gew.-Teile Kautschuk, bei dem es sich in den Beispielen entweder um Therban^{®} 3407 oder um Therban^{®} AT 3404 handelte.

**Tabelle 1: Mischungszusammensetzung**

| **Mischung** | **1** | **2** | **3** | **4** | **5** | **6** | **7** | **8** |
|---|---|---|---|---|---|---|---|---|
| Therban^{®} 3407 | 100 | 100 | 100 | 100 | 0 | 0 | 0 | 0 |
| Therban^{®} AT 3404 | 0 | 0 | 0 | 0 | 100 | 100 | 100 | 100 |
| SARET^{®} 633 | 30 | 30 | 30 | 30 | 30 | 30 | 30 | 30 |
| LUVOMAXX^{®} CDPA | 1,1 | 1,1 | 1,1 | 1,1 | 1,1 | 1,1 | 1,1 | 1,1 |
| ETHANOX^{®} 4703 | 0,1 | 0,1 | 0,1 | 0,1 | 0,1 | 0,1 | 0,1 | 0,1 |
| PHOTOMER^{®} 4017 F | 120 | 120 | 120 | 120 | 120 | 120 | 120 | 120 |
| DIPLAST^{®} 8-10/ST | 20 | 20 | 20 | 20 | 20 | 20 | 20 | 20 |
| SARTOMER^{®} SR 484 | 0 | 10 | 30 | 50 | 0 | 10 | 30 | 50 |
| PERKADOX^{®} 14-40 B-PD | 8 | 8 | 8 | 8 | 8 | 8 | 8 | 8 |

### Herstellung der Mischungen

Die Herstellung der Mischungen 1 bis 8 erfolgte auf einer Laborwalze der Firma Troester mit einem Walzendurchmesser von 150 mm, einer Arbeitsbreite von 250 mm und einer Kühlwassertemperatur von 20°C.

Hierfür wurde die Kautschuk-Komponente a) vorgelegt und nach 1 min. Laufzeit alle restlichen festen Bestandteile einschließlich des Peroxids als Vernetzerkomponente d) zugegeben, danach wurden alle flüssigen Bestandteile zugemischt. Die gesamte Mischzeit betrug 45 min.

Die Platten für die Bestimmung der mechanischen Eigenschaften wurden in einer Vulkanisierpresse der Firma Schwabenthan Labormaschinen zwischen Teflon-Folien unter den angegebenen Bedingungen vernetzt/vulkanisiert.

In Tabelle 1 ist der Vulkanisationsverlauf dargestellt, die in einem MDR Rheometer 2000 bei 170°C untersucht wurde.

**Tabelle 2: Vulkanisationsverlauf**

| **MDR - Rheometer 2000 at 170°C** | | | | | | | | | |
|---|---|---|---|---|---|---|---|---|---|
| S' (min) | (dNm) | 0,01 | 0,01 | 0,01 | 0,01 | 0,01 | 0,01 | 0,01 | 0,01 |
| S' (max) | (dNm) | 25,59 | 27,81 | 29,21 | 32,54 | 17,17 | 17,17 | 17,49 | 14,35 |
| t10 | (sec) | 27 | 27 | 29 | 29 | 28 | 29 | 29 | 29 |
| t80 | (sec) | 31 | 32 | 34 | 36 | 31 | 32 | 32 | 32 |
| t90 | (sec) | 32 | 33 | 35 | 32 | 32 | 33 | 33 | 33 |

| | | | | | | | | | |
|---|---|---|---|---|---|---|---|---|---|
| S'(min):Vulkameteranzeige im Minimum der Vernetzungsisotherme S'(max): Maximum der Vulkameteranzeige t₁₀: Zeit, bei der 10% des Umsatzes erreicht sind t₈₀: Zeit, bei der 80% des Umsatzes erreicht sind t₉₀: Zeit, bei der 90% des Umsatzes erreicht sind | | | | | | | | | |

Im Rheometer MCR 301 der Firma A Paar wurde die Viskosität der erfindungsgemäßen Mischungen in Abhängigkeit von den Scherraten bei einer Temperatur von 25 °C sowie einer Temperatur von 50 °C gemessen (Tabelle 3)

**Tabelle 3: Viskosität in Abhängigkeit von der Scherrate**

| **Rheometer MCR301 (Viskosität bei verschiedenen Scherraten)** | | | | | | | | | |
|---|---|---|---|---|---|---|---|---|---|
| **25°C** | Viskosität | | | | | | | | |
| Scherrate 0,01 [1/s] | [Pa*s] | 27.100 | 22.200 | 8.890 | 4.040 | 12.000 | 8.490 | 3.900 | 2.750 |
| Scherrate 0,10 [1/s] | [Pa*s] | 22.450 | 18.750 | 7.760 | 3.685 | 10.200 | 7.385 | 3.420 | 2.485 |
| Scherrate 1,00 [1/s] | [Pa*s] | 13.500 | 11.500 | 5.820 | 3.140 | 7.340 | 5.610 | 2.930 | 2.150 |
| Scherrate 10,00 [1/s] | [Pa*s] | 4.280 | 3.955 | 2.500 | 1.730 | 3.100 | 2.515 | 1.630 | 1.280 |
| Scherrate 100,00 [1/s] | [Pa*s] | 570 | 393 | 295 | 228 | 498 | 345 | 235 | 206 |
| | | | | | | | | | |

| **50°C** | | | | | | | | | |
|---|---|---|---|---|---|---|---|---|---|
| Scherrate 0,01 [1/s] | [Pa*s] | 5.860 | 4.910 | 2.140 | 1.190 | 2.890 | 1.970 | 1.040 | 685 |
| Scherrate 0,10 [1/s] | [Pa*s] | 5.085 | 4.260 | 1.845 | 980 | 2.380 | 1.715 | 846 | 630 |
| Scherrate 1,00 [1/s] | [Pa*s] | 4.100 | 3.450 | 1.590 | 869 | 2.030 | 1.490 | 747 | 567 |
| Scherrate 10,00 [1/s] | [Pa*s] | 2.105 | 1.800 | 1.045 | 665 | 1.280 | 987 | 584 | 455 |
| Scherrate 100,00 [1/s] | [Pa*s] | 266 | 270 | 166 | 135 | 191 | 175 | 125 | 115 |

Die Vulkanisateigenschaften der durch Vulkanisation in der Presse erhaltenen Vulkanisate wurden im Zugversuch bestimmt (Tabelle 4). Tabellen 5, 6 und 7 zeigen die Ergebnisse nach einer Heißluftalterung für 1, 3 und 7 Tage bei 150°C.

**Tabelle 4: Vulkanisateigenschaften**

| **Mischung** | | 1 | 2 | 3 | 4 | 5 | 6 | 7 | 8 |
|---|---|---|---|---|---|---|---|---|---|
| | | | | | | | | | |

| **Vulkanisation in der Presse:** | | | | | | | | | |
|---|---|---|---|---|---|---|---|---|---|
| Temperatur | (°C) | 170 | 170 | 170 | 170 | 170 | 170 | 170 | 170 |
| Zeit | (min) | 10 | 10 | 10 | 10 | 10 | 10 | 10 | 10 |
| | | | | | | | | | |

| **Zugversuch, S2, Raumtemperatur** | | | | | | | | | |
|---|---|---|---|---|---|---|---|---|---|
| F | (MPa) | 11,6 | 11,2 | 9,7 | 9,1 | 9,9 | 10,4 | 9,2 | 9,8 |
| D | (%) | 85 | 83 | 78 | 71 | 63 | 73 | 64 | 74 |
| M 10 | (MPa) | 1,8 | 1,8 | 1,9 | 1,5 | 2,1 | 2,1 | 2,1 | 2,1 |
| M 25 | (MPa) | 4,0 | 4,2 | 4,2 | 3,6 | 4,7 | 4,6 | 4,7 | 4,8 |
| M 50 | (MPa) | 7,6 | 7,7 | 7,3 | 7,0 | 8,2 | 7,9 | 7,9 | 8 |
| H 23°C | (Shore A) | 85 | 87 | 87 | 82 | 84 | 85 | 87 | 87 |
| H 23°C | (Shore D) | 29 | 25 | 28 | 23 | 28 | 30 | 30 | 29 |
| | | | | | | | | | |
| Abrieb | (mm³) | 148 | 143 | 156 | 155 | 165 | 160 | 153 | 145 |
| | | | | | | | | | |
| DVR | | | | | | | | | |
| 70h/150°C | (%) | 66 | 68 | 70 | 71 | 73 | 73 | 73 | 72 |

**Tabelle 5: Vulkanisateigenschaften nach Heißluftlagerung (1 d/150°C)**

| **1d/150°C** | | **1** | **2** | **3** | **4** | **5** | **6** | **7** | **8** |
|---|---|---|---|---|---|---|---|---|---|
| F | (MPa) | 13,2 | 13,9 | 11,6 | 11,0 | 10,6 | 10,2 | 10,6 | 11,5 |
| D | (%) | 80 | 77 | 70 | 68 | 57 | 59 | 60 | 64 |
| M 10 | (MPa) | 2,1 | 2,6 | 2,4 | 2,2 | 2,5 | 2,6 | 2,9 | 3,0 |
| M 25 | (MPa) | 4,7 | 5,6 | 5,2 | 4,8 | 5,4 | 5,5 | 5,9 | 6,2 |
| M 50 | (MPa) | 8,8 | 9,7 | 9,0 | 8,7 | 9,6 | 9,3 | 9,5 | 10,0 |
| H 23°C | (Shore A) | 87 | 88 | 88 | 85,4 | 89 | 88 | 88 | 89 |

| **Angaben der Änderungen gegenüber den Werten aus Tabelle 4 in % bzw. Shore A** | | | | | | | | | |
|---|---|---|---|---|---|---|---|---|---|
| ΔF | (%) | 14 | 24 | 20 | 21 | 7 | -2 | 15 | 17 |
| ΔD | (%) | -6 | -7 | -10 | -4 | -10 | -19 | -6 | -14 |
| ΔM 10 | (%) | 17 | 44 | 26 | 47 | 19 | 24 | 38 | 43 |
| ΔM 25 | (%) | 18 | 33 | 24 | 33 | 15 | 20 | 26 | 29 |
| ΔM 50 | (%) | 16 | 26 | 23 | 24 | 17 | 18 | 20 | 25 |
| ΔH | (Shore A) | 2 | 1 | 1 | 4 | 5 | 3 | 1 | 2 |

**Tabelle 6: Vulkanisateigenschaften nach Heißluftlagerung (3 d/150°C)**

| **3d/150°C** | | 1 | 2 | 3 | 4 | 5 | 6 | 7 | 8 |
|---|---|---|---|---|---|---|---|---|---|
| F | (MPa) | 13,5 | 14,8 | 12,2 | 11,1 | 12,2 | 10,9 | 10,7 | 11,2 |
| D | (%) | 74 | 76 | 67 | 61 | 64 | 58 | 57 | 56 |
| M 10 | (MPa) | 2,2 | 2,7 | 2,7 | 2,3 | 2,3 | 2,3 | 2,5 | 2,6 |
| M 25 | (MPa) | 5,0 | 5,7 | 5,8 | 5,0 | 5,3 | 5,5 | 5,7 | 5,9 |
| M 50 | (MPa) | 9,6 | 10,1 | 9,8 | 9,4 | 9,8 | 9,7 | 9,9 | 10,4 |
| H 23°C | (Shore A) | 88 | 89 | 88 | 86,7 | 88 | 89 | 90 | 89 |

| **Angaben der Änderungen gegenüber den Werten aus Tabelle 4 in % bzw. Shore A** | | | | | | | | | |
|---|---|---|---|---|---|---|---|---|---|
| ΔF | (%) | 16 | 32 | 26 | 22 | 23 | 5 | 16 | 14 |
| ΔD | (%) | -13 | -8 | -14 | -14 | 2 | -21 | -11 | -24 |
| ΔM 10 | (%) | 22 | 50 | 42 | 53 | 10 | 10 | 19 | 24 |
| ΔM 25 | (%) | 25 | 36 | 38 | 39 | 13 | 20 | 21 | 23 |
| ΔM 50 | (%) | 26 | 31 | 34 | 34 | 20 | 23 | 25 | 30 |
| ΔH | (Shore A) | 3 | 2 | 1 | 5 | 4 | 5 | 3 | 2 |

**Tabelle 7: Vulkanisateigenschaften nach Heißluftlagerung (7 d/150°C)**

| **7d/150°C** | | 1 | 2 | 3 | 4 | 5 | 6 | 7 | 8 |
|---|---|---|---|---|---|---|---|---|---|
| F | (MPa) | 13,8 | 7,0 | 13,0 | 10,3 | 11,6 | 10,5 | 10,9 | 11,9 |
| D | (%) | 65 | 32 | 60 | 47 | 51 | 45 | 45 | 50 |
| M 10 | (MPa) | 2,4 | 2,7 | 2,9 | 2,8 | 2,9 | 3,0 | 3,3 | 3,4 |
| M 25 | (MPa) | 5,6 | 6,0 | 6,3 | 6,2 | 6,3 | 6,5 | 6,9 | 7,1 |
| M 50 | (MPa) | 10,9 | 11,9 | 11,3 | -- | 11,3 | 11,4 | 11,6 | -- |
| H 23°C | (Shore A) | 88 | 89 | 90 | 91 | 90 | 88 | 90 | 90 |

| **Angaben der Änderungen gegenüber den Werten aus Tabelle 4 in % bzw. Shore A** | | | | | | | | | |
|---|---|---|---|---|---|---|---|---|---|
| ΔF | (%) | 19 | -38 | 34 | 13 | 17 | 1 | 19 | 21 |
| ΔD | (%) | -24 | -61 | -23 | -34 | -19 | -38 | -30 | -32 |
| ΔM 10 | (%) | 33 | 50 | 53 | 87 | 38 | 43 | 57 | 62 |
| ΔM 25 | (%) | 40 | 43 | 50 | 72 | 34 | 41 | 47 | 48 |
| ΔM 50 | (%) | 43 | 55 | 55 | -- | 38 | 44 | 47 | -- |
| ΔH | (Shore A) | 4 | 2 | 3 | 9 | 5 | 3 | 3 | 3 |

| **Werte** | **Dimension** | **Beschreibung** | **Prüfnorm** |
|---|---|---|---|
| ML1+4/100°C | [ME] | Viskosität nach Mooney | DIN 53523 Teil 1 |
| Drehmoment S' | [dNm] | Vulkanisationsverlauf | DIN 53529 Teil 3 |
| F | [MPa] | Zugfestigkeit | DIN 53504 |
| D | [%] | Bruchdehnung | DIN 53504 |
| Shore A; Shore D | | Härte | DIN 53505 |
| DVR | [%] | Druckverformungsrest | DIN ISO 815 Typ B |
| Scherviskosität | [Pa*s] | Viskosität bei verschiedenen Scherraten | |
| Abrieb | mm³ | Abrieb | DIN 53516 |
| Heißluft-Lagerung | | nach 1, 3, und 7 Tagen bei 150°C | DIN 53508 |
| | | | Verfahren 4.1.1 |
| | | | |

## Patentansprüche

1. Vulkanisierbare Mischungen enthaltend
a) mindestens einen optional hydrierten Nitrilkautschuk,
b) mindestens ein Metallsalz einer ungesättigten Carbonsäure,
c) mindestens ein bei Raumtemperatur in flüssiger Form vorliegendes Diacrylat und
d) mindestens einen Vernetzer.

2. Vulkanisierbare Mischungen nach Anspruch 1 enthaltend als Komponente c) Hexandioldiacrylat, Dipropylenglycolacrylat, Hexandiol-[2EO]-diacrylat und/oder Hexandiol-[2PO]-diacrylat.

3. Vulkanisierbare Mischungen nach Anspruch 1 oder 2 zusätzlich enthaltend e) mindestens ein bei Raumtemperatur in flüssiger Form vorliegendes monofunktionelles Acrylat, bevorzugt ausgewählt aus der Gruppe bestehend aus
(i) Octadecylacrylat
(ii) Laurylacrylat
(iii) Hexadecylacrylat und
(iv) Isodecylacrylat.

4. Vulkanisierbare Mischungen nach einem der Ansprüche 1 bis 3 zusätzlich enthaltend f) ein oder mehrere weitere Additive.

5. Vulkanisierbare Mischungen nach einem der Ansprüche 1 bis 4 enthaltend als Komponente a) einen optional hydrierten Nitrilkautschuk mit Wiederholungseinheiten, die sich von mindestens einem α,β-ungesättigten Nitril, mindestens einem konjugierten Dien und gegebenenfalls einem oder mehreren weiteren copolymerisierbaren Monomeren ableiten.

6. Vulkanisierbare Mischungen nach einem der Ansprüche 1 bis 5 enthaltend als Komponente b) ein Metallsalz einer ungesättigten Carbonsäure mit der allgemeinen Strukturformel 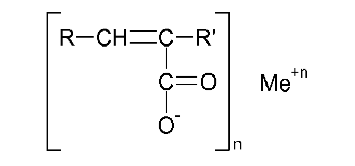 worin
RundR' gleich oder verschieden sind und aliphatische oder aromatische Kohlenwasserstoffreste oder ein Wasserstoffatom darstellen,
Me für Be, Mg, Ca, Sr, Ba, Ti, Cr, Mo, Mn, Fe, Co, Ni, Cu, Ag, Zn, Cd, Hg, Al, Sn, Pb oder Sb steht, bevorzugt für Mg, Ca, Zn und Al und
n 2, 3 oder 4 ist.

7. Vulkanisierbare Mischungen nach einem der Ansprüche 1 bis 6 enthaltend als Komponente b) Zinkacrylat, Zinkdiacrylat, Zinkmethacrylat oder Zinkdimethacrylat.

8. Vulkanisierbare Mischungen nach einem der Ansprüche 1 bis 7 enthaltend als Komponente d) eine Peroxoverbindung, bevorzugt Dialkylperoxide, Ketalperoxide, Aralkylperoxide, Peroxidether und Peroxidester, besonders bevorzugt Di-tert.-butylperoxid, Bis-(tert.-butylperoxyisopropyl)-benzol, Dicumylperoxid, 2,5-Dimethyl-2,5-di(tert.-butylperoxy)-hexan, 2,5-Dimethyl-2,5-di(tert.-butylperoxy)-hexen-(3), 1,1-Bis-(tert.-butylperoxy)-3,3,5-trimethyl-cyclohexan, Benzoylperoxid, tert.-Butylcumylperoxid und tert.-Butylperbenzoat.

9. Vulkanisierbare Mischungen nach einem der Ansprüche 1 bis 8 enthaltend
- 100 Gew.-Teile mindestens eines optional hydrierten Nitrilkautschuks als Komponente a)
- 10 bis 120 Gew.-Teile, bevorzugt 10 bis 85 Gew.-Teile, insbesondere 20 bis 65 Gew.-Teile mindestens eines Metallsalzes einer ungesättigten Carbonsäure als Komponente b),
- 5 bis 80 Gew.-Teile, bevorzugt 20 bis 60 Gew.-Teile mindestens eines flüssigen Diacrylats als Komponente c) und
- 1 bis 10 Gew.-Teile, bevorzugt 4 bis 8 Gew.-Teile, mindestens eines Vernetzers als Komponente d),
wobei die für die Komponenten b), c) und d) genannten Gew.-Teile jeweils auf 100 Gew.Teile der Komponente a) (bzw. der Summe der Komponenten a)) bezogen sind.

10. Vulkanisierbare Mischungen nach Anspruch 9 enthaltend 1 bis 100 Gew.-Teile, bevorzugt 1 bis 80 Gew.-Teile und insbesondere 1 bis 50 Gew.-Teile mindestens eines flüssigen monofunktionellen Acrylats als Komponente e).

11. Vulkanisierbare Mischungen nach Anspruch 1 enthaltend
a) 100 Gew .-Teile mindestens eines hydrierten Nitrilkautschuks mit Wiederholungseinheiten abgeleitet von mindestens einem konjugierten Dien, mindestens einem ungesättigten Nitril und gegebenenfalls einen oder mehreren weiteren copolymerisierbaren Monomeren, insbesondere eines hydrierten Butadien-Acrylnitril Copolymers,
b) 10 bis 120 Gew.-Teile, bevorzugt 10 bis 85 Gew.-Teile, insbesondere 20 bis 65 Gew.-Teile Zinkacrylat, Zinkdiacrylat, Zinkmethacrylat oder Zinkdimethacrylat,
c) 5 bis 80 Gew.-Teile, bevorzugt 20 bis 60 Gew.-Teile Hexandioldiacrylat, Dipropylenglycolacrylat, Hexandiol-[2EO]-diacrylat oder Hexandiol-[2PO]-diacrylat,
d) 1 bis 10 Gew.-Teile, bevorzugt 4 bis 8 Gew.-Teile eines peroxidischen Vernetzers, bevorzugt Bis-(tert.-butylperoxyisopropyl)-benzol und
e) optional 1 bis 100 Gew.-Teile, bevorzugt 1 bis 80 Gew.-Teile und insbesondere 1 bis 50 Gew.-Teile mindestens eines flüssigen monofunktionellen Acrylats,
wobei die für die Komponenten b), c), d) und e) genannten Gew.-Teile jeweils auf 100 Gew.Teile der Komponente a) (bzw. der Summe der Komponenten a)) bezogen sind.

12. Vulkanisierbare Mischungen nach Anspruch 11, **dadurch gekennzeichnet, dass** sie keinerlei Füllstoffe enthält.

13. Verfahren zur Herstellung der vulkanisierbaren Mischungen nach einem der Ansprüche 1 bis 12, indem man die Komponenten a), b), c) und d) mischt bzw. im Fall einer Mischung, die auch Komponente e) und/oder f) enthält, zusätzlich die Komponenten e) und f) zumischt.

14. Verwendung einer vulkanisierbaren Mischung nach einem der Ansprüche 1 bis 11 zur Reparatur von Formkörpern auf Kautschukbasis, bevorzugt von Formkörpern auf Basis von optional hydrierten Nitrilkautschuken, insbesondere von Walzenbelägen auf Basis von optional hydrierten Nitrilkautschuken.

15. Verfahren zur Reparatur von Fehlstellen in Formkörpern auf Kautschukbasis, in dem man die zu reparierenden Fehlstellen vor dem Auftrag der Mischung nach einem der Ansprüche 1 bis 11 ausfräst, entfettet und die Mischung bei Raumtemperatur bevorzugt aus einer Kartusche auf die Fehlstellen aufträgt und die Vulkanisation bei einer Temperatur im Bereich von 160°C bis 200°C durchführt.
